# EUROPÄISCHE PATENTSCHRIFT

(11) **EP 0 719 241 B1**
(45) Veröffentlichungstag und Bekanntmachung des Hinweises auf die Patenterteilung: **03.07.2002**
(21) Anmeldenummer: 95921674.8
(22) Anmeldetag: 23.06.1995
(51) Int. Cl.: C03B 27/012, C03C 21/00

(54) **VERFAHREN ZUM HERSTELLEN VON EBENEN ODER GEWÖLBTEN GLASPLATTEN**
PROCESS FOR PRODUCING FLAT OR CURVED GLASS PLATES
PROCEDE DE PRODUCTION DE PLAQUES DE VERRE PLANES OU BOMBEES

(30) Priorität: 08.07.1994 CH 218494
(43) Veröffentlichungstag der Anmeldung: 03.07.1996
(73) Patentinhaber: Vetrotech Saint-Gobain (International) AG, 3000 Bern 22 (CH)
(72) Erfinder: SEIDEL, Horst, CH-6318 Walchwil (CH); SCHMALT, Christoph, CH-8132 Egg (CH)
(74) Vertreter: Bruderer, Werner
(86) Internationale Anmeldenummer: CH9500140
(87) Internationale Veröffentlichungsnummer: WO9601792

(56) Entgegenhaltungen:
- WO-A-93/25487
- DE-B- 1 142 220
- DE-C- 602 431
- US-A- 3 287 200

## Beschreibung

Die Erfindung betrifft ein Verfahren zum Herstellen von ebenen oder gewölbten Glasplatten mit hoher Biegezugfestigkeit, wobei die Glasplatten zuerst thermisch oder chemisch vorgespannt werden, und anschliessend eine Wärmebehandlung auf einem Temperatur-Niveau unter der Transformationstemperatur des Glases durchgeführt wird, und die Anwendung des Verfahrens für die Herstellung von Sicherheits- und Brandschutz-Sicherheits-Verglasungen.

Glasplatten dieser Art finden Verwendung als Fassadenverkleidungen, als vorgespannte Glasscheiben in Fenstern oder Türen, aber auch als Teile von lichtdurchlässigen Bauelementen, welche Abgrenzungen, z.B. Wände von Räumen bilden. Die Glasplatten werden dabei in bekannter Weise als Einzelscheibe oder im Verbund mit mehreren Scheiben als Verbund- oder Isolierverglasung eingesetzt. Bei allen Anwendungsfällen, wo eine höhere mechanische oder thermische Stabilität des Glases verlangt wird, ist es notwendig, die Glasplatten vorzuspannen. Solche Vorspannverfahren sind bekannt, wobei das thermische Vorspannen beispielsweise in DE-C2-36 11 844 beschrieben ist. Das Vorspannen bewirkt bei Sicherheits-Verglasungen eine höhere Festigkeit gegen Bruch und bei einem allfälligen Scheibenbruch eine Reduzierung des Verletzungsrisikos. Bei Brandschutz-Verglasungen bewirkt die durch das Vorspannen erreichte höhere Festigkeit eine Erhöhung der Temperatur-Wechselfestigkeit und damit eine höhere Sicherheit im Brandfalle, wenn die Glasscheibe partiell erwärmt wird. Aus US-A-3 287 200 ist es im weiteren bekannt, Glasplatten zuerst thermisch zu behandeln, bzw. vorzuspannen und dann zusätzlich noch chemisch vorzuspannen. Dadurch soll ein spezieller Aufbau von Zug- und Druckspannungen erreicht werden, wodurch die Festigkeit derartiger Gläser verbessert werden soll. Es ist bekannt, für derartige Verglasungen Alumosilikat-Gläser, Borosilikat-Gläser oder Natron-Kalk-Gläser zu verwenden. Da mittels dem Vorspannen für verschiedene Anwendungsfälle noch keine genügende mechanische Festigkeit erreicht wird, müssen zusätzliche Massnahmen getroffen werden, indem einzelne Glasplatten zu Verbundgläsern zusammengebaut werden, wie dies beispielsweise aus EP-B1-0 219 801 bekannt ist, oder es werden spezielle Rahmenprofile und Dichtungsmaterialien verwendet, wie sie beispielsweise in CH-A5-658 099 oder bei einer Verbindung der genannten Technologien, beispielsweise in EP-A1-0 528 781, beschrieben sind. Diese Zusatzmassnahmen sind insbesondere bei Brandschutz-Verglasungen notwendig, um bei gleichbleibender Temperatur-Wechselfestigkeit innerhalb der Glasscheibe eine möglichst geringe Temperatur-Differenz zu erhalten. Die Temperatur-Wechselfestigkeit ist dabei bekanntlich das Mass für die maximal zulässige Temperatur-Differenz innerhalb einer Glasscheibe.

Aus der Praxis ist nun aber bekannt, dass auch bei Anwendung all dieser bekannten Technologien bei Verglasungen mit vorgespannten Glasplatten bereits bei der Herstellung, oder nach Verlauf einer kurzen oder längeren Zeit, Spontanbrüche auftreten. Dies ist in der Publikation Schweizer Aluminium Rundschau 12/1972 Seiten 383 ff. beschrieben. Aus dieser Publikation und aus der Praxis ist bekannt, dass die Anzahl der Spontanbrüche reduziert werden kann, wenn die vorgespannten Glasscheiben nach dem Vorspannvorgang einer Wärmebehandlung, einem sogenannten Heiss-Lagerungs-Test, im allgemeinen "Heat-Soak-Test" genannt, unterzogen werden. Beispielsweise werden Verglasungen aus Natron-Kalk-Glas zur Erzeugung der Vorspannung im Herstellverfahren, in Abhängigkeit von der Glaszusammensetzung, auf eine Temperatur zwischen 500 und 700°C aufgewarmt und anschliessend die beiden Aussenflächen einer Scheibe beispielsweise durch kalte Luft schnell abgekühlt. Die auf diese Weise vorgespannte Glasscheibe wird anschliessend dem "Heat-Soak-Test" unterzogen, indem sie während ca. drei Stunden auf 240°C erwärmt wird. Bei dieser Wärmebehandlung werden gemäss der oben genannten Beschreibung diejenigen Scheiben zerstört, welche Nickelsulfideinschlüsse enthalten. Für die Wärmebehandlung, bzw. den "Heat-Soak-Test" werden Temperaturen von normalerweise etwa 250°C angewendet, da bei höheren Temperaturen die Vorspannung des Glases merklich beeinträchtigt wird. Der untere vorgeschlagene Bereich für die Heisslagerung, bzw. Haltephase liegt bei 160°C während zwei Stunden. Die Anwendung von Temperaturen bis max. 290°C wurde bereits vorgeschlagen, fand jedoch wegen der Reduktion der Vorspannung und damit der Reduktion der Temperatur-Wechselfestigkeit in der Praxis nur eingeschränkt Anwendung. Bereits bei Wärmebehandlungstemperaturen unter 250°C tritt eine Reduktion der im vorhergehenden Verfahrensschritt in der Glasscheibe erzeugten Vorspannung auf. Diese Reduktion wird jedoch im Hinblick auf die Reduktion der Zahl von späteren Spontanbrüchen in Kauf genommen. Die Vermeidung von Spontanbrüchen ist insbesondere im Fassadenbau von grosser Bedeutung.

An Stelle des thermischen Verfahrens können die Glasplatten auch durch Anwendung bekannter chemischer Verfahren vorgespannt werden. Dabei wird in der Glasoberfläche ein Ionenaustausch bewirkt, wodurch die Glasoberfläche unter Druck gesetzt wird. Bei Flachglas wird das Verfahren des chemischen Vorspannens wenig angewendet, da es teurer ist, und die vorgespannte Oberflächenschicht nur relativ dünn ist.

Besonders hohe Anforderungen werden an Brandschutz-Verglasungen gestellt, bei welchen für die Verwendung in Gebäuden Testvorschriften und Normen bestehen, welche erfüllt werden müssen. Dies sind beispielsweise die bekannten Ländernormen oder die Europanormen prEN/EN 648, 571 und 573. Um die hier geforderten Feuerwiderstandszeiten von zum Beispiel 30, 45, 60 oder 90 Minuten in den entsprechenden Sicherheits-Klassen zu erfüllen, werden die oben beschriebenen bekannten Massnahmen wie Vorspannen der Glasplatten, Aufbau von Verbundgläsern und Halterung in speziell ausgebildeten Rahmen kombiniert. Wegen der relativ niedrigen Biegezugfestigkeit der vorgespannten Glasplatten sind aufwendige Kombinationen und insbesondere aufwendige Rahmenhalterungen notwendig, um die geforderten Widerstandszeiten zu erreichen. Trotz dem Vorspannen und der anschliessenden "Heat-Soak-Test" Wärmebehandlung treten nach der Durchführung der Tests bzw. der Wärmebehandlung bei den Anwendungen solcher Glasscheiben in der Praxis immer noch Spontanbrüche bei Verglasungen auf. Angestrebt wäre hier bei den Brandprüfungen und Brandfällen an entsprechenden Verglasungen eine Bruchquote von ca. 5% aller eingesetzten Gläser während den ersten zehn Minuten, was jedoch mit den heutigen bekannten Lösungen nicht gewährleistet werden kann.

Es ist deshalb Aufgabe der vorliegenden Erfindung, ein Verfahren zur Herstellung von Glasplatten zu schaffen, welche eine höhere Biegezugfestigkeit aufweisen, wodurch auch eine erhöhte Temperatur-Wechselfestigkeit erreicht wird. Gleichzeitig soll das Verfahren sicherstellen, dass die Wahrscheinlichkeit von Spontanbrüchen reduziert wird. Beim Einsatz von gleichen Glassorten, und/oder gleichen Scheibenaufbauten, und/oder gleichen Halterungen im Rahmen, sollen höhere Widerstandszeiten im Brandfalle und generell eine höhere Sicherheit gegen Bruch erreicht werden. Das Verfahren soll für Borosilikat-Gläser und für Natron-Kalk-Gläser anwendbar sein.

Diese Aufgabe wird durch die im Patentanspruch 1 definierten Merkmale gelöst. Vorteilhafte Weiterbildungen der Erfindung ergeben sich nach den Merkmalen der abhängigen Patentansprüche.

Beim erfindungsgemässen Verfahren wird eine Glasplatte in bekannter Weise vorerst thermisch oder chemisch vorgespannt, anschliessend einer Wärmebehandlung unterworfen und die Glasplatten, welche die Wärmebehandlung unbeschädigt überstehen, in einem zusätzlichen Verfahrensschritt noch einmal chemisch oder thermisch vorgespannt. Jede Glasplatte wird in nacheinander folgenden Verfahrensschritten mindestens zweimal vorgespannt, wobei zwischen jedem Vorspannvorgang eine Wärmebehandlung angewendet wird. Als Ausgangsmaterial für die Glasplatten sind alle Gläser geeignet, welche einen linearen Wärmeausdehnungskoeffizienten α im Bereiche von 3,0 bis 9,5 x 10⁻⁶ K⁻¹ und einen Elastizitätsmodul E im Bereiche von 6,0 bis 9,0 x 10⁴ N/mm² aufweisen. Dabei richtet sich die Anwendung des Verfahrens auf Gläser, welche nach dem Herstellungsprozess Einschlüsse, beispielsweise in der Form von Nickelsulfid oder andere Inhomogenitäten, wie feine Fremdkristalle, Risse, Blasen oder Schlieren aufweisen. Ein wesentlicher Vorteil des erfindungsgemässen Verfahrens liegt nun darin, dass die Wärmebehandlung bei höheren Temperaturen durchgeführt werden kann und der durch die höheren Temperaturen entstehende Abbau der Biegezugfestigkeit durch den zusätzlichen Verfahrensschritt des nachfolgenden zweiten Vorspannens ausgeglichen wird. Die Wärmebehandlung bei höheren Temperaturen ermöglicht das Ausscheiden einer höheren Anzahl von Glasplatten mit Einschlüssen oder Inhomogenitäten und damit eine erhebliche Reduktion der Gefahr von späteren Spontanbrüchen. Ueberraschenderweise zeigt sich nun auch, dass bei Anwendung eines zweiten Vorspannungsvorganges nach der Wärmebehandlung eine höhere Biegezugfestigkeit erreicht werden kann und damit auch die Temperatur-Wechselfestigkeit der nach dem erfindungsgemässen Verfahren behandelten Gläser entsprechend höher ist. Werden handelsübliche Natron-Kalk-Gläser nach den bisher bekannten Verfahren beispielsweise thermisch vorgespannt und anschliessend einer Wärmebehandlung im Rahmen eines "Heat-Soak-Tests" unterworfen, so lässt sich in den Glasplatten, welche während des Tests nicht zerstört wurden, eine durchschnittliche Biegezugfestigkeit von 120 - 150 N/mm² feststellen. Das thermische Vorspannen erfolgt dabei durch Erwärmen auf eine Temperatur zwischen 600 - 850°C und anschliessendem Abkühlen. Bei Anwendung des erfindungsgemässen Verfahrens mit beispielsweise zweimaligem Vorspannen und dazwischen und danach angewendeter Wärmebehandlung, weisen die nicht zerstörten Glasplatten eine Biegezugfestigkeit von minimal ca. 180 N/mm² und im Durchschnitt ca. 207 N/mm² auf. Zusätzlich wird die Restwahrscheinlichkeit, dass die Glasplatten durch spätere Spontanbrüche zerstört werden, durch die Anwendung einer höheren Temperatur während der Wärmebehandlungsphase erheblich reduziert, und es wird eine Versagens-Wahrscheinlichkeit von weniger als 5% während den ersten zehn Minuten eines Brandes erreicht. Die Wärmebehandlung zwischen den beiden Vorspannvorgängen erfolgt dabei bei Temperaturen, welche höher als 300°C sind. Die Glasplatten werden z.B. bei einer Temperatur von 310 ± 10°C dieser Temperatur während mindestens zwei Stunden, im Durchschnitt während ca. 9 Stunden Haltezeit ausgesetzt. Die Höhe der Wärmebehandlungstemperatur und die Dauer der Behandlung wird dabei durch die Zusammensetzung des Glases und teilweise durch den gewünschten Sicherheits-Standard bestimmt. Bei Anwendung des erfindungsgemässen Wärmebehandlungsschrittes werden nicht nur diejenigen Glasplatten erfasst, welche Nickelsulfideinschlüsse aufweisen, sondern auch solche mit anderen Inhomogenitäten, da diese Glasplatten während der Wärmebehandlung zerstört und aus dem Fabrikationsprozess beseitigt werden. Das erfindungsgemässe Verfahren hat im weiteren den Vorteil, dass das thermische Vorspannen im bekannten Temperatur-Bereich erfolgen kann, d.h. durch Erwärmen auf eine Temperatur im Bereich zwischen Transformationstemperatur und Schmelztemperatur der entsprechenden Glassorte und anschliessendes Abkühlen. Nach dem allgemeinen Stand der Technik wird erwartet, dass höhere Härtungen bzw. Festigkeiten des Glases erreicht werden können, wenn dieses auf ein höheres Temperatur-Niveau gebracht und entsprechend stärker abgekühlt wird. Mit dem erfindungsgemässen Verfahren ist dies jedoch nicht notwendig, sondern es können für die Vorspannvorgänge die gleichen Temperaturen eingesetzt werden, wie bei den bisherigen bekannten Verfahren, und es werden trotzdem Werte für die Biegezugfestigkeit erreicht, welche mindestens 25% oder mehr über den mit den bisherigen Verfahren erreichten Werten liegen.

Ein weiterer Vorteil bei Anwendung des erfindungsgemässen Verfahrens ergibt sich, wenn für die Glasplatten Gläser mit einem Eisenoxidgehalt Fe₂O₃ von maximal 0,02 Gewichtsprozenten verwendet werden. Der Gehalt an anderen färbenden Oxiden wird zweckmässigerweise auf maximal 0,01 Gewichtsprozent beschränkt. Gläser dieser Art werden durch Wärmestrahlung weniger rasch erwärmt und weisen an sich eine bessere Temperatur-Wechselfestigkeit, bzw. einen höheren Wärmespannungsfaktor auf, als Gläser mit höheren Eisenoxidgehalten oder Gehalten von anderen Oxiden, insbesondere Metalloxiden. Damit lässt sich die durch das erfindungsgemässe Verfahren angestrebte und auch erreichte höhere Biegezugfestigkeit der Gläser optimieren. Dadurch, dass die Glasplatten mindestens im Oberflächenbereich oder durchgehend mit Farboxiden eingefärbt werden, oder auf mindestens einer Seite mit einer Beschichtung versehen werden, ergeben sich Vorteile, indem die Licht- und/oder Wärmedurchlässigkeit der Glasplatten beeinflusst wird. Damit lassen sich die erfindungsgemäss behandelten Glasplatten an bestimmte Verwendungszwecke anpassen. Dies zum Beispiel dann, wenn eine reduzierte Transmission für Sonnenstrahlung oder eine erhöhte Reflektion von Wärmestrahlung gewünscht wird. Vorteilhaft ist es, zur Erhöhung der Reflektion auf mindestens einer Seite der Glasplatte eine Beschichtung mit einer Emissivität von mindestens 4% aufzubringen. Unter Emissivität oder auch Emissionsvermögen wird dabei der abgestrahlte Energieanteil verstanden, gemäss der Definition in der europäischen Norm prEN 673.

Bei Glasplatten, welche eine Oberflächenbeschichtung aufweisen, ist es vorteilhaft, diese Beschichtung entlang der Kanten streifenförmig zu entfernen. Die Breite dieser Streifen beträgt, von der Kante her etwa rechtwinklig gegen den Mittenbereich der Platte gemessen, mindestens 5 mm. Das Entfernen der Beschichtung bewirkt eine Verbesserung des Wärmeüberganges im Bereiche der Randeinfassung von Verglasungen. Damit wird, z.B. im Falle eines Brandes, die Temperatur-Differenz zwischen den Randbereichen und dem Mittelbereich einer Glasplatte reduziert und dadurch die Bruchgefahr. Zweckmässigerweise wird die Beschichtung in der gleichen Breite entfernt, wie die Verglasung vom Rahmenprofil abgedeckt wird. Diese Breite entspricht damit mindestens dem Glaseinstand (GE) im Rahmenprofil der Verglasung.

Da beim Zuschneiden der Glasplatten an den Kanten und im Kantenbereich Unregelmässigkeiten und Haarrisse entstehen, werden die Glasplatten, welche für Sicherheits- und/oder Brandschutz-Verglasungen verwendet werden, im Kantenbereich nachbearbeitet. Diese Bearbeitung erfolgt durch Schleifen und/oder Polieren und hat zum Ziel, die Unregelmässigkeiten und Haarrisse zu entfernen. Beim erfindungsgemässen Verfahren erfolgt diese Bearbeitung vor dem ersten Verfahrensschritt, nämlich dem ersten Vorspannvorgang, wobei die Bearbeitung der Kantenbereiche, bzw. Kanten gemäss der Erfindung mit Schleifeinrichtungen erfolgt, welche an der Oberfläche der Glasplatte einen minimalen Anpressdruck von 2,5 bar erzeugen. Gleichzeitig wird die Glasplatte bei der Bearbeitung an den Bearbeitungswerkzeugen mit einer minimalen Vorschubgeschwindigkeit von 1,7 m/min vorbeigeführt, und als Schleifflüssigkeit wird Wasser ohne Schleifzusätze verwendet. Da die Schleifflüssigkeit aus Wasser ohne Zusätze besteht, kann diese in einfacher Weise aufgearbeitet werden, und es entstehen keine schwer entsorgbaren Abfälle, und die Kosten für zusätzliche Schleifzusätze entfallen. Bei der vorgegebenen Kombination von Verwendung von Wasser als Schleifflüssigkeit und den minimalen Vorschubgeschwindigkeiten und Anpressdrücken, ergibt sich gegenüber den bisher angewendeten Bearbeitungsverfahren eine bessere Qualität der Kantenbereiche, was zu einer zusätzlichen Reduktion der Bruchwahrscheinlichkeit bei Glasplatten, welche gemäss dem erfindungsgemässen Verfahren behandelt werden, führt.

Besondere Vorteile ergeben sich bei der Verwendung des erfindungsgemässen Verfahrens, bzw. der erfindungsgemäss hergestellten Glasplatten zur Herstellung von Brandschutz-Sicherheits-Verglasungen oder von Einscheiben-Sicherheits-Verglasungen oder Verbund-Sicherheits-Verglasungen. Derartige Verglasungen bestehen aus mindestens einer Glasplatte. Zur Erreichung höherer Sicherheits- oder Widerstandswerte werden mehrere Glasplatten zu einem Verbund zusammengefasst, wobei sie in bekannter Weise in direktem Kontakt stehen, oder mit Abstand zueinander angeordnet sind und bei Bedarf auch mit zusätzlichen Schutzschichten aus anderen Materialien kombiniert werden. Diese Verglasungen weisen Randbereiche auf, welche in einem Halterahmen erfasst werden oder mit Halterungen zusammenwirken. Die Verwendung der erfindungsgemässen Glasplatten ergibt auch bei der Herstellung derartiger Verglasungen eine beachtliche Reduktion der Gefahr von Spontanbrüchen, eine Erhöhung der Bruchsicherheit und eine erhebliche Verbesserung der Temperatur-Wechselfestigkeit. Bei Brandfällen weisen die erfindungsgemässen Verglasungen höhere Widerstandszeiten auf und können in höheren Sicherheits-Klassen eingeordnet werden.

Im folgenden wird die Erfindung anhand von Ausführungsbeispielen und unter Bezugnahme auf die beiliegende Zeichnung noch näher erläutert. Dabei zeigt:

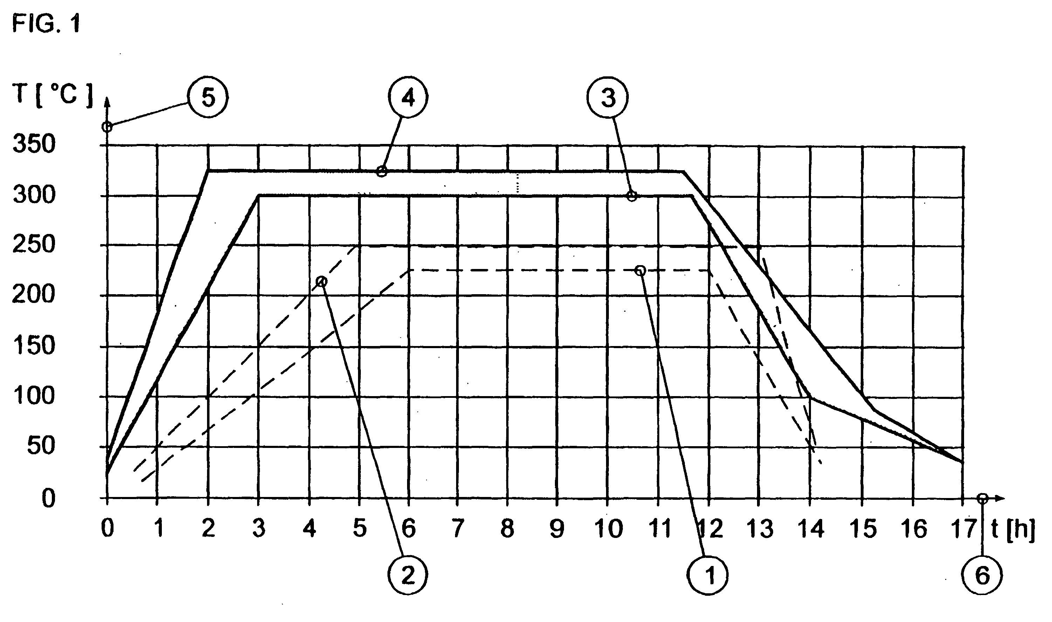

- Fig. 1: ein Temperatur/Zeit-Diagramm mit dem Verlauf der Wärmebehandlung.

Figur 1 zeigt in einem Temperatur/Zeit-Diagramm den Verlauf der Wärmebehandlung von Glasplatten beim bekannten "Heat-Soak-Test" und beim erfindungsgemässen Verfahren. Dabei ist auf der Abszissenachse 5 die Temperatur in °C und auf der Ordinatenachse 6 die Zeit in Stunden aufgetragen. Die dargestellten Kurven 1 und 2 zeigen den Bereich an, welcher bei einem "Heat-Soak-Test" gemäss dem Stand der Technik durchlaufen wird. Dies ist der Bereich, welcher zwischen den beiden Kurven 1 und 2 eingeschlossen wird. Der zwischen den Kurven 3 und 4 eingeschlossene Bereich des Diagramms beschreibt den Verlauf eines Wärmebehandlungsverfahrens gemäss der Erfindung. Einer Aufheizphase folgt eine Haltephase und daran schliesst eine Abkühlphase an. Im traditionellen "Heat-Soak-Test" werden in der Haltephase normalerweise maximal Temperaturen von 250°C angewendet. Demgegenüber bewegt sich im dargestellten Beispiel für das erfindungsgemässe Verfahren die Wärmebehandlung während der Haltephase in einem Bereich von beispielsweise 300 bis 320°C und wird während nahezu 9 Stunden Haltezeit angewendet.

Die Vorteile des erfindungsgemässen Verfahrens lassen sich anhand der nachfolgenden Beispiele im Vergleich zum Stand der Technik darstellen. Es werden Glasplatten nach vier unterschiedlichen Verfahren hergestellt, anschliessend die Biegezugfestigkeit ermittelt und das Bruchverhalten der unterschiedlich hergestellten Glasplatten in einem Brandversuch festgestellt. Dabei werden für alle vier Beispiele 6 mm dicke Natron-Kalk-Glasscheiben (Float-Glas) verwendet.

### Vergleichsbeispiel 1

In an sich bekannter Weise werden aus einem Glastableau von 3,20 m x 6,00 m der Dicke 6 mm werden 15 Scheiben in den Abmessungen 360 mm x 1.100 mm zugeschnitten, die Kanten geschliffen und poliert, sowie gewaschen und unter folgenden Bedingungen thermisch vorgespannt: Ofentemperatur = 680°C, Verweilzeit = 100 Sekunden, Abschreckzeit = 100 Sekunden. Die an zehn ausgewählten vorgespannten Scheiben gemessene mittlere Biegezugfestigkeit (σ_{BZ}) beträgt 135 N/mm². Die Vorspannung erfolgt dabei in an sich bekannter Weise in einem Härteofen üblicher Bauart.

### Vergleichsbeispiel 2

Es werden wiederum aus einem Glastableau von 3,20 m x 6,00 m der Dicke 6 mm 15 Scheiben in den Abmessungen 360 mm x 1.100 mm zugeschnitten, die Kanten geschliffen und poliert, sowie gewaschen und unter folgenden Bedingungen thermisch vorgespannt: Ofentemperatur = 690°C, Verweilzeit = 111 Sekunden, Abschreckzeit = 111 Sekunden.
Anschliessend werden die 15 vorgespannten Scheiben in bekannter Weise dem in Figur 1 dargestellten "Heat-Soak-Test" (HST) gemäss dem zwischen den Linien 1 und 2 liegenden Temperatur/Zeit-Feld unterzogen, wobei eine Scheibe im Verlaufe des "Heat-Soak-Tests" zerstört wurde.
Die an zehn ausgewählten Scheiben gemessene mittlere Biegezugfestigkeit (σ_{BZ}) beträgt 148 N/mm².

### Vergleichsbeispiel 3

Auch hier werden aus einem Glastableau von 3,20 m x 6,00 m der Dicke 6 mm 15 Scheiben in den Abmessungen 360 mm x 1.100 mm zugeschnitten, die Kanten geschliffen und poliert, sowie gewaschen und unter folgenden Bedingungen thermisch vorgespannt: Ofentemperatur = 690°C, Verweilzeit = 111 Sekunden, Abschreckzeit = 111 Sekunden.
Anschliessend werden die 15 vorgespannten Scheiben einer Wärmebehandlung auf höherem Temperatur-Niveau entsprechend dem in Figur 1 zwischen den Linien 3 und 4 dargestellten Temperatur/Zeit-Feld unterzogen, wobei drei Scheiben im Verlaufe der Wärmebehandlung zerstört wurden.
Die an zehn ausgewählten Scheiben gemessene mittlere Biegezugfestigkeit (σ_{BZ}) beträgt nur noch 140 N/mm².

### Beispiel 4

Dieses Beispiel betrifft Glasplatten, welche nach dem erfindungsgemässen Verfahren hergestellt werden. Dazu werden aus einem Glastableau von 3,20 m x 6,00 m der Dicke 6 mm 15 Scheiben in den Abmessungen 360 mm x 1.100 mm zugeschnitten, die Kanten geschliffen und poliert, sowie gewaschen und unter folgenden Bedingungen thermisch vorgespannt: Ofentemperatur = 690°C, Verweilzeit = 111 Sekunden, Abschreckzeit = 111 Sekunden.
Anschliessend werden die 15 vorgespannten Glasplatten der erfindungsgemässen Wärmebehandlung, wie sie dem in Figur 1 zwischen den Linien 3 und 4 liegenden Temperatur/Zeit-Feld entspricht, unterzogen. Während dieser Wärmebehandlung wurden vier Glasplatten zerstört. Die nicht zerstörten elf Glasplatten werden nun ein zweites Mal vorgespannt und zwar unter folgenden Bedingungen: Temperatur = 690°C, Verweilzeit = 111 Sekunden, Abschreckzeit = 111 Sekunden.
Die an zehn ausgewählten Scheiben gemessene mittlere Biegezugfestigkeit (σ_{BZ}) beträgt 207 N/mm².

Für die anschliessenden Brandprüfungen wurden nach den vier Herstellverfahren gemäss den Beispielen 1 bis 4 je fünf Glasscheiben in den Abmessungen 1.200 mm x 2.000 mm mit einer Dicke von 6 mm hergestellt. Diese Scheiben wurden je in einen Halterahmen mit identischen Stahlprofilen und einem konstanten Glaseinstand (GE) von 12 ±1 mm eingesetzt und anschliessend die Brandversuche in an sich bekannter Weise durchgeführt. Das Ergebnis dieser Brandversuche stellt sich wie folgt dar: Von den jeweils fünf Scheiben zerbrachen während den Versuchen in den ersten fünf Minuten von den nach Beispiel 1 hergestellten Scheiben vier, von den nach Beispiel 2 hergestellten Scheiben drei, von den nach Beispiel 3 hergestellten Scheiben ebenfalls drei, jedoch von den nach Beispiel 4 hergestellten Scheiben keine einzige.

Die zum Beispiel 1 gemessenen tiefen Werte der durchschnittlichen Biegezugfestigkeit sind darauf zurückzuführen, dass in der ausgewählten Menge von Glasplatten auch noch alle Platten mit Defekten enthalten sind. Diese brechen bei erheblich tieferen Belastungen, weshalb der Durchschnittswert ebenfalls tiefer liegt als, bei den Platten gemäss Beispiel 2.

Aus dem Verlauf der mittleren Biegezugfestigkeit (σ_{BZ}) über die Beispiele 2 und 3 lässt sich klar erkennen, dass die Biegezugfestigkeit durch die Wärmebehandlung, bzw. den "Heat-Soak-Test" abgebaut wird und zwar um so stärker, je höher die Temperatur ist. Bei der Durchführung eines "Heat-Soak-Tests" auf erhöhtem Temperatur-Niveau brechen während des Tests mehr Platten als beim Beispiel 2, und die Biegezugfestigkeit der verbleibenden ganzen Gläser ist gleichzeitig erheblich reduziert. Aus diesem Grunde wurden bis heute normalerweise keine Temperaturen über 250°C angewendet. Der Vergleich der Ergebnisse des Beispieles 4 mit den Ergebnissen der Beispiele 1 bis 3 zeigt demgegenüber deutlich, dass die nach dem erfindungsgemässen Verfahren hergestellten Glasplatten bzw. Scheiben gemäss Beispiel 4 die höchsten Biegezugfestigkeitswerte (σ_{BZ}), unter weitestgehender Eliminierung der im Glasinneren vorhandenen Inhomogenitäten, aufweisen. Noch deutlicher wird die wesentliche Verbesserung und Ueberlegenheit des erfindungsgemässen Verfahrens durch den Vergleich der Brandprüfungen an den nach den Beispielen 1 bis 4 produzierten Glasscheiben erkennbar. Die erfindungsgemäss hergestellten Glasplatten haben als Folge der erheblich höheren Biegezugfestigkeit auch eine erheblich höhere Temperatur-Wwechselfestigkeit. Dies allein stellt schon eine beachtliche Verbesserung der Bruchsicherheit und Temperatur-Beständigkeit dar. Durch die zusätzliche Elimination von Glasplatten mit Inhomogenitäten wird die Versagens-Wahrscheinlichkeit zusätzlich reduziert. Deshalb können Glasplatten und Verglasungen, welche nach dem erfindungsgemässen Verfahren hergestellt sind, auch erheblich höheren Belastungen standhalten.

Weitere Vorteile des erfindungsgemässen Verfahrens zur Herstellung von thermisch hochvorspannbaren und mechanisch hochfesten Gläsern mit hohen Biegezugfestigkeiten (σ_{BZ}) liegen in der einfachen Gestaltung, Anordnung und Durchführung der Produktions- bzw. Verfahrensschritte und der gegenüber den konventionellen Verfahren hohen Reproduzierbarkeit im Hinblick auf die Biegezugfestigkeit (σ_{BZ}) und Temperatur-Wechselfestigkeit (TWF). Dies hat zur Folge, dass die nach der vorliegenden Erfindung hergestellten Glasscheiben konventionell und deshalb wirtschaftlich verglast werden können und die Versagens-Wahrscheinlichkeit der Glasscheiben, d.h. der gefürchtete Bruch in den ersten zehn Minuten bei Norm-Brandprüfungen und bei Bränden im Bereich der 5%-Fraktile, liegt.

## Patentansprüche

1. Verfahren zum Herstellen von ebenen oder gewölbten Glasplatten mit hoher Biegezugfestigkeit, wobei die Glasplatten zuerst thermisch oder chemisch vorgespannt werden, und anschliessend eine Wärmebehandlung auf einem Temperatur-Niveau unter der Transformatiönstemperatur des Glases durchgeführt wird, **dadurch gekennzeichnet, dass** die Glasplatten in nacheinander folgenden Verfahrensschritten mindestens zweimal thermisch oder chemisch vorgespannt werden, und zwischen je zwei Vorspannvorgängen eine Wärmebehandlung angewendet wird, wobei diese Wärmebehandlung eine Aufheizphase, eine Haltephase der Temperatur und eine Abkühlphase umfasst, und dabei die Haltephase der Temperatur während der Wärmebehandlung eine Dauer von mindestens zwei Stunden hat und bei mehr als 250°C ausgeführt wird.

2. Verfahren nach Patentanspruch 1, **dadurch gekennzeichnet, dass** nach dem ersten Vorspannen der Glasplatten die Verfahrensschritte Wärmebehandlung und anschliessendes erneutes thermisches oder chemisches Vorspannen mehrmals wiederholt werden.

3. Verfahren nach einem der Patentansprüche 1 oder 2, **dadurch gekennzeichnet, dass** das thermische Vorspannen bei den nacheinander folgenden Vorspann-Verfahrensschritten bei unterschiedlichen Höchsttemperaturen durchgeführt wird.

4. Verfahren nach einem der Patentansprüche 1 bis 3, **dadurch gekennzeichnet, dass** die Wärmebehandlung bei einer Haltetemperatur von mindestens 300°C durchgeführt wird.

5. Verfahren nach einem der Patentansprüche 1 bis 3, **dadurch gekennzeichnet, dass** nach dem ersten Vorspannvorgang eine erste Wärmebehandlung bei Haltetemperaturen unter 280°C, und zwischen zwei nachfolgenden Vorspannvorgängen eine zweite Wärmebehandlung bei Haltetemperaturen über 300°C durchgeführt wird.

6. Verfahren nach einem der Patentansprüche 1 bis 5, **dadurch gekennzeichnet, dass** jede Haltephase der Temperatur während einer Wärmebehandlung der Glasplatten während mindestens zwei Stunden und maximal zehn Stunden durchgeführt wird.

7. Verfahren nach einem der Patentansprüche 1 bis 6, **dadurch gekennzeichnet, dass** beim thermischen Vorspannen die Glasplatten auf eine Temperatur im Bereiche zwischen 600°C und 850°C erwärmt und anschliessend abgekühlt werden.

8. Verfahren nach einem der Patentansprüche 1 bis 7, **dadurch gekennzeichnet, dass** für die Glasplatten Gläser mit einem linearen Wärmeausdehnungskoeffizienten α von 3,0 bis 9,5 x 10⁻⁶ K⁻¹ und einem Elastizitätsmodul E von 6,0 bis 9,0 x 10⁴ N/mm² in einem Temperatur-Bereich von 20 bis 300°C verwendet werden.

9. Verfahren nach einem der Patentansprüche 1 bis 8, **dadurch gekennzeichnet, dass** für die Glasplatten Gläser mit einem Eisenoxidgehalt Fe₂O₃ von maximal 0,02 Gewichtsprozenten und/oder mit einem Gehalt von anderen färbenden Oxiden von maximal 0,01 Gewichtsprozenten verwendet- werden.

10. Verfahren nach einem der Patentansprüche 1 bis 8, **dadurch gekennzeichnet, dass** für die Glasplatten Gläser verwendet werden, welche mindestens im Oberflächenbereich mit Farboxiden eingefärbt sind.

11. Verfahren nach einem der Patentansprüche 1 bis 10, **dadurch gekennzeichnet, dass** auf mindestens einer Seite der Glasplatte eine Beschichtung mit einer Emissivität von mindestens 4% aufgebracht wird.

12. Verfahren nach Patentanspruch 10, **dadurch gekennzeichnet, dass** die Beschichtung entlang der Kanten der Glasplatten in Richtung der Mitte der Platte in einem Bereich von mindestens 5 mm Breite entfernt wird.

13. Verfahren nach einem der Patentansprüche 1 bis 12, **dadurch gekennzeichnet, dass** die Kanten der Glasplatten vor dem Vorspannen und Wärmebehandeln durch Schleifen und/oder Polieren bearbeitet werden.

14. Verfahren nach Patentanspruch 13, **dadurch gekennzeichnet, dass** zum Bearbeiten der Kanten als Schleifflüssigkeit Wasser ohne Schleifzusätze verwendet wird.

15. Verfahren nach Patentanspruch 13 oder 14, **dadurch gekennzeichnet, dass** die Glasplatte bei der Bearbeitung der Kanten mit einer vorschubgeschwindigkeit von mindestens 1,7 m/min an den Bearbeitungswerkzeugen vorbeigeführt wird.

16. Verfahren nach einem der Patentansprüche 13 bis 15, **dadurch gekennzeichnet, dass** der Anpressdruck der Bearbeitungswerkzeuge an die Oberfläche der Glasplatte mit mindestens 2,5 bar bestimmt wird.

17. Anwendung des Verfahrens nach einem der Patentansprüche 1 bis 16 zur Herstellung von Brandschutz-Sicherheits-Verglasungen.

18. Anwendung des Verfahrens nach einem der Patentansprüche 1 bis 16 zur Herstellung von Einscheiben-Sicherheits-Verglasungen oder Verbund-Sicherheits-Verglasungen.

## Claims

1. A method for manufacturing flat or curved glass plates having a high tensile bending strength, the glass plates firstly being thermally or chemically prestressed and then subjected to a heat treatment at a temperature level below the transformation temperature of the glass, **characterised in that** the glass plates are thermally or chemically prestressed at least twice in successive method steps, and a heat treatment is applied in each case between two prestressing processes, the said heat treatment comprising a heating up phase, a temperature holding phase and a cooling down phase', and the temperature holding phase during the heat treatment having a duration of at least two hours and being carried out at over 250°C.

2. A method according to claim 1, **characterised in that**, after the first prestressing of the glass plates, the method steps of heat treatment and subsequent secondary thermal or chemical prestressing are repeated a number of times.

3. A method according to one of claims 1 or 2, **characterised in that** the thermal prestressing is carried out at different maximum temperatures in the case of successive prestressing method steps.

4. A method according to one of claims 1 to 3, **characterised in that** the heat treatment is carried out at a holding temperature of at least 300°C.

5. A method according to one of claims 1 to 3, **characterised in that**, after the first prestressing process, a first heat treatment is carried out at holding temperatures below 280°C, and a second heat treatment is carried out at holding temperatures above 300°C between two successive prestressing processes.

6. A method according to one of claims 1 to 5, **characterised in that** each temperature holding phase during a heat treatment of the glass plates is carried out for a period of at least two hours and a maximum of ten hours.

7. A method according to one of claims 1 to 6, **characterised in that**, during the thermal prestressing, the glass plates are heated to a temperature in the region of 600° to 850°C and are then cooled.

8. A method according to one of claims 1 to 7, **characterised in that** glass is used for the glass plates which has linear coefficients of thermal expansion α of 3.0 to 9.5 x 10⁻⁶ K⁻¹ and a modulus of elasticity E of 6.0 to 9.0 x 10⁴ N/mm² in a temperature range of 20 to 300°C.

9. A method according to one of claims 1 to 8, **characterised in that** glass is used for the glass plates which has an iron oxide content Fe₂O₃ of 0.02 percent by weight maximum and/or a content of other colouring oxides of 0.01 percent by weight maximum.

10. A method according to one of claims 1 to 8, **characterised in that** glass which is coloured with colour oxides at least in the surface region is used for the glass plates.

11. A method according to one of claims 1 to 10, **characterised in that** a coating having an emissivity of at least 4% is applied to at least one side of the glass plate.

12. A method according to claim 10, **characterised in that** the coating is removed along the edges of the glass plates in the direction of the centre of the plate over an area having a width of at least 5 mm.

13. A method according to one of claims 1 to 12, **characterised in that** the edges of the glass plates are machined prior to the prestressing and heat treatment by grinding and/or polishing.

14. A method according to claim 13, **characterised in that** water without grinding additives is used as a grinding liquid for machining the edges.

15. A method according to claim 13 or 14, **characterised in that**, during the machining of the edges, the glass plate is guided past the machining tools with a feed velocity of at least 1.7 m/min.

16. A method according to one of claims 13 to 15, **characterised in that** the contact pressure of the machining tools against the surface of the glass plate is at least 2.5 bar.

17. Application of the method according to one of claims 1 to 16 for manufacturing fire protection safety glazing.

18. Application of the method according to one of claims 1 to 16 for manufacturing single-pane safety glazing or compound safety glazing.

## Revendications

1. Procédé de production de plaques de verre planes ou bombées ayant une grande résistance à la traction par flexion, dans lequel les plaques de verre sont tout d'abord trempées thermiquement ou chimiquement et sont ensuite soumises à un traitement thermique à un niveau de température en dessous de la température de transformation du verre, **caractérisé en ce que** les plaques de verre sont trempées au moins deux fois thermiquement ou chimiquement au cours d'étapes successives du procédé et **en ce que**, entre les deux processus de trempage, un traitement thermique est appliqué, ce traitement thermique comprenant une phase d'échauffement, une phase de maintien de la température et une phase de refroidissement, et la phase de maintien de la température pendant le traitement thermique ayant dans ce cas une durée d'au moins deux heures et étant effectuée à plus de 250 °C.

2. Procédé selon la revendication 1, **caractérisé en ce que** après le premier trempage des plaques de verre, les étapes du procédé traitement thermique et ensuite trempage thermique ou chimique renouvelé sont répétées à plusieurs reprises.

3. Procédé selon une des revendications 1 ou 2, **caractérisé en ce que** le trempage thermique lors des étapes successives du procédé de trempage est effectué à des températures maximales différentes.

4. Procédé selon une des revendications 1 à 3, **caractérisé en ce que** le traitement thermique est effectué à une température de maintien d'au moins 300 °C.

5. Procédé selon une des revendications 1 à 3, **caractérisé en ce qu'**après le premier processus de trempage, un premier traitement thermique est effectué à des températures de maintien en dessous de 280 °C et, entre deux processus successifs de trempage, un deuxième traitement thermique est effectué à des températures de maintien au-dessus de 300 °C.

6. Procédé selon une des revendications 1 à 5, **caractérisé en ce que** chaque phase de maintien de la température pendant un traitement thermique des plaques de verre est effectuée pendant au minimum deux heures et au maximum dix heures.

7. Procédé selon une des revendications 1 à 6, **caractérisé en ce que** lors du trempage thermique, les plaques de verre sont chauffées à une température dans la plage comprise entre 600 °C et 850 °C et sont ensuite refroidies.

8. Procédé selon une des revendications 1 à 7, **caractérisé en ce que** des verres ayant un coefficient de dilatation thermique linéaire α de 3,0 à 9,5 x 10⁻⁶ K⁻¹ et un module d'élasticité E de 6,0 à 9,0 x 10⁴ n/mm² dans une plage de température de 20 à 300 °C sont utilisés pour les plaques de verre.

9. Procédé selon une des revendications 1 à 8, **caractérisé en ce que** des verres ayant une teneur en oxyde de fer Fe²O³ de 0,02 pour-cent en poids au maximum et / ou ayant une teneur en autres oxydes colorants de 0,01 pour-cent en poids au maximum sont utilisés pour les plaques de verre.

10. Procédé selon une des revendications 1 à 8, **caractérisé en ce que** des verres qui sont au moins teintés avec des oxydes colorants dans la région de la surface sont utilisés pour les plaques de verre.

11. Procédé selon une des revendications 1 à 10, **caractérisé en ce qu'**un revêtement ayant une émissivité d'au moins 4 % est appliqué sur au moins un côté de la plaque de verre,.

12. Procédé selon la revendication 10, **caractérisé en ce que** le revêtement le long des bords des plaques de verre en direction du centre de la plaque est enlevé dans une région d'au moins 5 mm de largeur.

13. Procédé selon une des revendications 1 à 12, **caractérisé en ce que** les bords des plaques de verre sont usinés avant le trempage et le traitement thermique par meulage et / ou polissage.

14. Procédé selon la revendication 13, **caractérisé en ce que** de l'eau est utilisée comme liquide de meulage sans auxiliaires de meulage pour usiner les bords.

15. Procédé selon la revendication 13 ou 14, **caractérisé en ce que** la plaque de verre est passée devant les outils d'usinage à une vitesse d'avance d'au moins 1,7 m/min lors de l'usinage des bords.

16. Procédé selon une des revendications 13 à 15, **caractérisé en ce que** la pression appliquée par les outils d'usinage sur la surface de la plaque de verre est réglée à au moins 2,5 bars.

17. Utilisation du procédé conforme à une des revendications 1 à 16 pour la production de vitrages de sécurité ignifuges.

18. Utilisation du procédé conforme à une des revendications 1 à 16 pour la production de vitrages de sécurité trempés ou de vitrages de sécurité feuilletés.
